Europäisches Patentamt

European Patent Office

Office européen des brevets

(11) Publication number: **0 502 479 A1**

## EUROPEAN PATENT APPLICATION

(21) Application number: **92103615.8**

(22) Date of filing: **03.03.92**

(51) Int. Cl.5: **G11B 5/64**

(30) Priority: **04.03.91 JP 37556/91**

(43) Date of publication of application:
**09.09.92 Bulletin 92/37**

(84) Designated Contracting States:
**DE FR GB IT LU NL**

(71) Applicant: **DIAFOIL HOECHST CO., LTD.**
**3-2, Marunouchi 2-chome, Chiyoda-ku**
**Tokyo(JP)**

(72) Inventor: **Utsumi, Shigeo**
**1786-1, Shimotsuruma**
**Yamato-shi, Kanagawa-ken(JP)**

(74) Representative: **TER MEER - MÜLLER -**
**STEINMEISTER & PARTNER**
**Mauerkircherstrasse 45**
**W-8000 München 80(DE)**

(54) **Digital recording medium.**

(57) A digital recording medium having a non-magnetic support made of a polyethylene naphthalate film which is prepared by stretching the film in a longitudinal direction, coating the film with a coating liquid containing a lubricant before stretching in a transverse direction, stretching the coated film in a transverse direction and heat setting the film without restretching in a longitudinal direction and which has at least 800 kg/mm$^2$ of a Young's modulus in the longitudinal direction of the film; at least 700 kg/mm$^2$ of a Young's modulus in the transverse direction of the film; 0.008 μm or less of a center line average roughness on the smooth surface of the film; and the number of protrusions having a height of at least 0.27 μm on the smooth surface of the film which is measured by a multiple interference method, the recording medium having good electromagnetic conversion properties, running durability and being suitable for long-time recording.

EP 0 502 479 A1

## BACKGROUND OF THE INVENTION

The present invention relates to a digital recording medium. More particularly, the present invention relates to a digital recording medium which is excellent in electromagnetic conversion characteristics and running durability and suitable for long-time recording.

## Description of the Related Art

In these years, as a magnetic recording layer of a high density magnetic recording medium, there has been proposed a metal thin film which is formed on a non-magnetic support by a vacuum deposition method such as vacuum evaporation or sputtering, or plating.

The metal thin film formed by such thin film forming method has a thin film thickness so that surface unevenness of the non-magnetic support directly reflects on surface unevenness of the magnetic layer. Therefore, the surface of the non-magnetic support should be as smooth as possible. However, for the purpose of the improvement of handling properties of the support such as winding and unwinding of a film or the decrease of flaws generated during the film production, it is rather preferable for the film to have a rough surface.

Then, it is highly desired to develop a film which satisfies the above both requirements without deteriorating the properties required for the digital recording medium.

## SUMMARY OF THE INVENTION

One object of the present invention is to provide a plastic film which is suitable as a non-magnetic support of a digital recording medium.

Another object of the present invention is to provide a digital recording medium which satisfies the above requirements.

According to the present invention, there is provided a digital recording medium comprising a non-magnetic support made of a polyethylene naphthalate film which is prepared by stretching said film in a longitudinal direction, coating said film with a coating liquid containing a lubricant before stretching in a transverse direction, stretching the coated film in a transverse direction and heat setting the film without restretching in a longitudinal direction and which has following properties, and a thin layer of a ferromagnetic metal formed on a smooth surface of said polyethylene naphthalate film:

$Y_{MD} \geq 800$

$Y_{TD} \geq 700$

$Ra \leq 0.008$

$H_1 \leq 10$

wherein $Y_{MD}$ is a Young's modulus (kg/mm$^2$) in the longitudinal direction of the film; $Y_{TD}$ is a Young's modulus (kg/mm$^2$) in the transverse direction of the film; Ra is a center line average roughness ($\mu$m) of the smooth surface of the film;

and $H_1$ is the number of protrusions having a height of at least 0.27 $\mu$m on the smooth surface of the film (number/100 cm$^2$) which is measured by a multiple interference method.

## DETAILED DESCRIPTION OF THE INVENTION

Polyethylene naphthalate to be used in the present invention is a polymer comprising repeating units of ethylene 2,6-naphthalate and includes polyethylene naphthalate modified with up to 10 % by mole, preferably up to 5 % by mole of at least one other polymerizable component.

Polyethylene naphthalate itself is a known polymer and can be prepared by polycondensating ethylene glycol with naphthalene-2,6-dicarboxylic acid or its derivative such as methyl naphthalene-2,6-dicarboxylate in the presence of a suitable catalyst under suitable polymerization conditions. In the polymerization, it is possible to add at least one other polymerizable component to a polymerization system. Examples of the other component are dicarboxylic acids (e.g. adipic acid, oxalic acid, isophthalic acid, telephthalic acid, naphthalene-2,7-dicarboxylic acid, diphenyletherdicarboxylic acid, etc.) and their lower alkyl esters; hydroxycarboxylid acids (e.g p-hydroxybenzoic acid, p-hydroxyethoxybenzoic acid, etc.) and their esters; dihydric alcohols (e.g. propylene glycol, trimethylene glycol, tetramethylene glycol, pentamethylene glycol, hexamethylene glycol, diethylene glycol, etc.); polyalkylene glycols (e.g. polyethylene glycol, polytetramethylene glycol, etc.) and the like.

Polyethylene naphthalate may contain any one of conventionally used additives such as a light-shielding agent (e.g. titanium dioxide, etc.), a stabilizer (e.g. phosphoric acid, phosphorous acid and their esters), an antioxidant (e.g. hindered phenol, etc.), a polycondensation regulator, a crystallization regulator (e.g. higher aliphatic carboxylic acids), a plasticizer, and the like.

When a degree of polymerization of polyethylene naphthalate to be used in the present invention is too low, mechanical properties of the film may be deteriorated. Then, its intrinsic viscosity is at least 0.40, preferably from 0.5 to 0.7.

To prevent flaws of the film during the film production, the polymer may contain finely divided inactive particles. Examples of the inactive particles are alumina, kaolin, talc, magnesium carbonate, calcium carbonate, barium carbonate, calcium sulfate, barium sulfate, lithium phosphate, calcium phosphate, magnesium phosphate, magnesium oxide, silicon oxide, titanium oxide, lithium fluoride, carbon black, salts of terephthalic acid with metals such as Ca, Ba, Zn and Mn, and the like.

A shape of each of the inactive particles may be a sphere, a bulk or a flat shape, and its properties such as hardness, specific gravity, color and the like are not limited. An average particle size of the inactive particles is from 0.001 to 10 $\mu$m, preferably from 0.1 to 3 $\mu$m in terms of an equivalent sphere diameter.

An amount of the inactive particles contained in the film is usually from 0.01 to 1 % by weight, preferably from 0.01 to 0.5 % by weight, more preferably from 0.02 to 0.3 % by weight. To prevent the flaws caused by contact between a roll and the film during the production, preferably 0.001 to 0.3 % by weight of finely divided alumina is added to the polymer.

The center line average height Ra of the film to be used in the present invention is not larger than 0.008 $\mu$m, preferably not larger than 0.006 $\mu$m, more preferably not larger than 0.004 $\mu$m. Even when Ra is 0.008 $\mu$m or less, if very large protrusions are present, they will cause drop outs and other drawbacks. Then, the number of interference fringes of the first order or higher (namely protrusions having a height of at least 0.27 $\mu$m) when measured by the multiple interference method should be 10 per 100 cm$^2$ or less.

Since polyethylene naphthalate has a large melt viscosity, it is difficult to remove large particles with a filter during the film formation by melt extrusion. Therefore, to suppress the number of the large protrusions, it is preferable to remove the large particles during polymerization of polyethylene naphthalate.

As the filter, usually a leaf filter is used. A filter material is preferably a metal mesh, a sintered metal mesh and a sintered metal. Particulate fillers such as metal particles, sand, glass beads and metal wires are less preferred since their regeneration is difficult. A mesh of the filter is preferably from 1000 to 10,000 mesh.

Polyethylene naphthalate to be used in the present invention has a Young's modulus in the longitudinal direction ($Y_{MD}$) of at least 800 kg/mm$^2$ and a Young's modulus in the transverse direction ($Y_{TD}$) of at least 700 kg/mm$^2$. Preferably, the Young's moduli both in the longitudinal and transverse directions are at least 800 kg/mm$^2$. More preferably, $Y_{MD}$ is at least 1000 kg/mm$^2$ and $Y_{TD}$ is at least 800 kg/mm$^2$. When either one of $Y_{MD}$ and $Y_{TD}$ does not satisfy the above requirement, the polyethylene naphthalate film cannot be used as the non-magnetic support of the digital recording medium of the present invention.

In the present invention, the polyethylene naphthalate film having the above strength is used without restretching in the longitudinal direction. The film is usually stretched in the longitudinal direction under specific conditions. That is, the film is longitudinally stretched continuously in a temperature-lowering condition, preferably stepwise, without cooling the film to a temperature lower than its glass transition temperature ($T_g$) in a range where a birefringence $\Delta$n exceeds 0.100.

The polyethylene naphthalate film of the present invention is coated with the coating liquid containing the lubricant before stretching in the transverse direction. As the lubricant, any one of conventional lubricants such as aluminum acrylate, molybdenum, fine silica, fluororesins, various organic particles and the like may be used. When a discontinuous coating layer is provided, the coating liquid preferably comprises a linear silicone compound (a) having a molecular weight of 30,000 to 300,000, a silane coupling agent (b), a water-soluble polymer (c) and a wax (d) in a weight ratio of 10-100:5-100:10-200:0-200.

The polyethylene naphthalate film is coated with the coating liquid, stretched in the transverse direction and then heat set without restretching in the longitudinal direction to obtain the film to be used as the non-magnetic support in the present invention. Then, on the surface of the film having Ra of 0.008 $\mu$m or less, the metal thin layer is formed as a magnetic layer of the digital recording medium by a conventional method such as electroless plating, electrolytic plating, sputtering, ion plating and the like.

PREFERRED EMBODIMENTS OF THE INVENTION

The present invention will be explained further in detail by following Examples, which do not limit the scope of the present invention. In Examples, "parts" are by weight.

In Examples, the properties of the film were measured as follows:

1. Young's modulus

Using Tensilon OTM-II (manufactured by Toyo Boldwin), the Young's modulus of the film was measured at 25°C, 50 %RH under the following conditions:

Sample shape:     Rectangular
                         (length of 15 cm, width of 1 cm)
Chuck distance:    10 cm
Pulling rate:        100 %/sec.

2. Center line average roughness (Ra, $\mu$m)

By the use of a surface roughness tester (SE-3FK manufactured by Kosaka Kenkyusho, Ltd.), the center line average height was measured according to JIS B-0601-1976, with necessary modifications. The measuring conditions were the use of a cntact needle having having a tip radius of 2 $\mu$m, 30 mg of probe contact pressure, 80 $\mu$m of cutoff, and 2.5 mm of a measuring length.

The measurement was performed at 12 points on the film and the remaining 10 values after omitting the largest and smallest values were averaged. The average was reported in the Table.

3. The number of large protrusions ($H_1$)

After vapor depositing aluminum on the film surface, interference fringes were generated by the multiple interference method with a measuring wavelength of 0.54 $\mu$m using a surface finish microscope (manufactured by Nippon Kogaku), and the number of the interference fringes having the first order or higher was counted by area integration in an area of 10 cm$^2$ and converted to the number in an area of 100 cm$^2$.

A mirror reflectance in the measurement was 65 %.

Example 1

Preparation of polyethylene naphthalate

In a reactor, dimethyl naphthalane-2,6-dicarboxylate (100 parts), ethylene glycol (60 parts) and calcium acetate monohydrate (0.1 part) were charged to carry out transesterification. That is, a reaction temperature was gradually raised from the initial temperature of 180°C to 230°C over 4 hours with evaporating off methanol to complete the transesterification.

After adding phosphoric acid (0.04 part), titanium oxide having an average particle size of 0.3 $\mu$m (0.30 part) and antimony trioxide (0.04 part) were added to initiate the polycondensation reaction. That is, the temperature was gradually raised to 290°C while the pressure was gradually decreased from the atmospheric pressure to 0.3 mmHg.

After 4 hours from the start of the reaction, the polycondensation reaction was terminated, and polyethylene naphthalate was discharged in a nitrogen atmosphere. The polymer melt as such was filtered through a filter corresponding 2500 mesh directly connected to an extruder and then extruded in a strand form and cut to obtain chips (polymer raw material (A)), which had the intrinsic viscosity of 0.60.

In the same manner as in the above except that 0.12 % by weight of silica having an average particle size of 0.20 $\mu$m was added, the polymer raw material (B) was prepared.

Film preparation

The raw materials (A) and (B) were mixed in a weight ratio of 1:1 and dried. Then, the mixture was filtered through a two-step filter corresponding 2000 mesh and 2500 mesh and extruded at 295°C to form a sheet and processed by the electrostatic pinning cooling method to obtain an amorphous sheet.

The amorphous film was 2.5 times stretched at 135°C in one direction and then 2.0 times stretched at 120°C without cooling to a temperature lower than Tg in the same direction to obtain a longitudinally stretched film. Thereafter, before stretching in the transverse direction, an aqueous emulsion (C) having the following composition was coated on one surface of the film and an aqueous solution of copolyesterether containing colloids was coated on the other surface of the film. Then, the coated film was 4.1 times stretched at 130°C in the width direction.

| Aqueous emulsion (C) | |
|---|---|
| Epoxized polydimethylsiloxane emulsion: | 0.42 wt. % |
| Silane coupling agent [N-$\beta$-(aminoethyl)-$\gamma$-aminopropylmethyldimethoxysilane]: | 0.048 wt. % |
| Alkylphenol type nonionic surfactant: | 0.20 wt. % |

The processed film was heat set at 180°C, again 1.1 times stretched in the width direction and heat set at 220°C, followed by relaxing in both the longitudinal and transverse directions to obtain the film having a thickness of 4.5 $\mu$m.

On the smooth surface of the polyester film (the surface coated with colloid-containing copolyesterether), a thin film of a cobalt-iron alloy of 1500 Å in thickness was formed by vapor deposition. Then, on the cobalt-iron thin film, a protective film containing an epoxy resin and a silicone coupling agent was coated in a thickness of 0.1 $\mu$m. On the other surface, a back coating layer was formed by a conventional method.

The film having the metal recording layer and the backcoating layer was cut in the longitudinal direction to obtain a magnetic tape.

Though the thickness of the base film of this magnetic tape was as thin as 4.5 $\mu$m, the tape had no flaw and was excellent in drop out, electromagnetic conversion properties such as a S/N ratio, running properties of the tape and running durability. The tape was an excellent digital recording tape.

Examples 2 and 3

In the same manner as in Example 1 except that film production conditions and a thickness of the film were changed, a biaxially orientated film was produced and, from the produced film, a magnetic tape was fabricated. The magnetic tape had good properties.

Comparative Example 1

Using a polyethylene terephthalate film having a thickness of 4.5 $\mu$m and high strength both in the longitudinal and width directions, a magnetic tape was fabricated. But, the vapor deposition defects appeared and it was difficult to fabricate a magnetic tape.

Comparative Example 2

By varying the film production conditions, a film having the properties shown in the Table was produced and then a magnetic tape was fabricated in the same manner as in Example 1. However, the tape had poor durability.

Table

| Example No. | 1 | 2 | 3 | Com.1 | Com.2 |
|---|---|---|---|---|---|
| Ra ($\mu$m) | 0.006 | 0.006 | 0.006 | 0.006 | 0.006 |
| $H_1$ (/100 cm$^2$) | 0 | 0 | 0 | 1 | 0 |
| $Y_{MD}$ (kg/mm$^2$) | 820 | 830 | 1020 | 620 | 750 |
| $Y_{TD}$ (kg/mm$^2$) | 710 | 820 | 820 | 620 | 600 |
| Film thickness ($\mu$m) | 4.5 | 4.5 | 3.9 | 4.5 | 4.5 |

**Claims**

1. A digital recording medium comprising a non-magnetic support made of a polyethylene naphthalate film which is prepared by stretching said film in a longitudinal direction, coating said film with a coating liquid containing a lubricant before stretching in a transverse direction, stretching the coated film in a transverse direction and heat setting the film without restretching in a longitudinal direction and which

EP 0 502 479 A1

has following properties, and a thin layer of a ferromagnetic metal formed on a smooth surface of said polyethylene naphthalate film:

$Y_{MD} \geqq 800$

$Y_{TD} \geqq 700$

$Ra \leqq 0.008$

$H_1 \leqq 10$

wherein $Y_{MD}$ is a Young's modulus (kg/mm$^2$) in the longitudinal direction of the film; $Y_{TD}$ is a Young's modulus (kg/mm$^2$) in the width direction of the film; Ra is a center line average roughness ($\mu$m) of the smooth surface of the film; and $H_1$ is the number of protrusions having a height of at least 0.27 $\mu$m on the smooth surface of the film (number/100 cm$^2$) which is measured by a multiple interference method.

2. The digital recording medium according to claim 1, wherein polyethylene naphthalate has an intrinsic viscosity of at least 0.40.

3. The digital recording medium according to claim 1, wherein polyethylene naphthalate contains finely divided inactive particles.

4. The digital recording medium according to claim 1, wherein said inactive particles have an average particle size of 0.01 to 10 $\mu$m in terms of an equivalent sphere diameter.

5. The digital recording medium according to claim 3, wherein an amount of said inactive particles is from 0.01 to 1 % by weight of polyethylene naphthalate.

6. The digital recording medium according to claim 1, wherein said average center line roughness is not larger than 0.006 $\mu$m.

7. The digital recording medium according to claim 1, wherein both $Y_{MD}$ and $Y_{TD}$ are at least 800 kg/mm$^2$.

8. The digital recording medium according to claim 1, wherein $Y_{MD}$ is at least 1000 kg/mm$^2$ and $Y_{TD}$ is at least 800 kg/mm$^2$.

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 229 255 (DIAFOIL COMPANY) 22 July 1987<br>* page 1, paragraph 1 *<br>* page 6, paragraph 2 *<br>* page 7, paragraph 1 *<br>* page 11, last paragraph - page 12, paragraph 1 *<br>* page 12, last paragraph *<br>* page 13, last paragraph - page 14, paragraph 1 *<br>* page 20, paragraph 1 *<br>* page 23; table 1 *<br>--- | 1-4,6 | G11B5/64 |
| A | PATENT ABSTRACTS OF JAPAN<br>vol. 7, no. 87 (P-190)9 April 1983<br>& JP-A-58 014 319 ( TEIJIN KK ) 27 January  1983<br>* abstract *<br>----- | 1,3,5 | |
| | | | **TECHNICAL FIELDS SEARCHED (Int. Cl.5 )**<br><br>G11B |

The present search report has been drawn up for all claims

| Place of search | Date of completion of the search | Examiner |
|---|---|---|
| THE HAGUE | 26 MAY 1992 | KLOCKE S. |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P0401)